# FASCICULE DE BREVET EUROPEEN

(11) **EP 1 057 037 B1**
(45) Date de publication et mention de la délivrance du brevet: **16.01.2002**
(21) Numéro de dépôt: 99908919.6
(22) Date de dépôt: 17.02.1999
(51) Int. Cl.: G01P 15/09

(54) **CAPTEUR DE CLIQUETIS A FAIBLE DISPERSION DE SENSIBILITE**
KLOPFSENSOR MIT GERINGER EMPFINDLICHKEITSSTREUUNG
KNOCK SENSOR WITH LOW SENSITIVITY DISPERSION

(30) Priorité: 27.02.1998 FR 9802409
(43) Date de publication de la demande: 06.12.2000
(73) Titulaire: SIEMENS AUTOMOTIVE S.A., 31036 Toulouse Cédex (FR)
(72) Inventeur: ROQUES, Patrick, F-31770 Colomiers (FR)
(74) Mandataire: Zedlitz, Peter, Dipl.-Inf.
(86) Numéro de dépôt international: EP9901033
(87) Numéro de publication internationale: WO9944069

(56) Documents cités:
- US-A- 4 967 114
- US-A- 5 125 263

## Description

La présente invention est relative à un capteur accélérométrique destiné à la mesure du cliquetis des moteurs à explosion, et plus particulièrement à un tel capteur présentant une dispersion de sensibilité réduite.

On connaît de la technique antérieure, par exemple de la demande de brevet français n° 2 715 737, des capteurs de cliquetis comportant une embase constituée d'une collerette et d'un manchon cylindrique fileté à l'extrémité opposée à la collerette, un émpilage sensible aux accélérations comprenant au moins un élément piézo-électrique enfilé sur le manchon, et un écrou coopérant avec le filetage du manchon pour précontraindre l'empilage entre la collerette et l'écrou. Ces capteurs sont destinés à être montés sur la culasse d'un moteur à explosion, au moyen d'une vis traversant le manchon. Les vibrations du moteur sont transmises à l'empilage et font varier la contrainte appliquée à l'élément piézo-électrique, générant ainsi un signal électrique représentatif de la fréquence et de l'intensité des vibrations, qui peut être recueilli sur les bornes du capteur. Ce signal est exploité par une électronique associée afin de régler certains paramètres de commande du moteur.

On connait également des documents US 4,967,114 et US 5,125,263 de tels capteurs comportant une rondelle anti-friction placée dans l'empilage ou entre l'écrou et l'empilage, dont la fonction est de découpler le signal électrique et d'éviter une rotation de l'empilage lors du serrage de l'écrou.

Cependant, ces capteurs sont produits en grande série, et on a pu constater que, soumis à une vibration de fréquence et d'intensité prédéterminées, les capteurs délivraient des signaux présentant une dispersion non négligeable, préjudiciable à la précision du réglage des moteurs.

La présente invention a donc pour but de proposer un tel capteur dont la fabrication en série est facilitée par une diminution de la dispersion de sensibilité observée.

On atteint ces buts de l'invention, ainsi que d'autres qui apparaîtront dans la suite de la présente description, avec un capteur de cliquetis du type décrit ci dessus, dans lequel l'écrou est revêtu d'un traitement de surface antifriction, par exemple par un film sec non gras déposé par trempage de l'écrou dans une dispersion aqueuse de polymères synthétiques, pour limiter la dispersion de l'effort de précontrainte appliqué à l'empilage.

Selon une variante non exclusive de la caractéristique précédente, l'empilage comporte en partie supérieure une rondelle en matériau antifriction. Avantageusement, l'écrou porte directement sur une rondelle de contact et cette rondelle est revêtue, sur la face coopérant avec l'écrou, d'une couche de matériau antifriction et isolant électriquement.

Selon une autre variante, l'écrou est en bronze et coopère avec un filetage et une surface supérieure de l'empilage en acier.

D'autres caractéristiques et avantages du capteur suivant l'invention apparaîtront à la lecture de la description qui va suivre et à l'examen du dessin annexé dans lequel :
- la figure 1 représente une vue en coupe d'un premier mode de réalisation du capteur,
- la figure 2 représente une vue en coupe d'un second mode de réalisation de ce capteur.

Comme on l'a vu plus haut, le but de l'invention est de limiter la dispersion du signal délivré par le capteur. En étudiant les causes de cette dispersion, il est apparu que l'amplitude du signal délivré était susceptible de varier, pour une même vibration d'excitation, en fonction de la précontrainte appliquée à l'élément sensible piézo-électrique compris dans le capteur. On a ainsi constaté que la limitation de la dispersion de cette précontrainte permettait d'atteindre le but fixé.

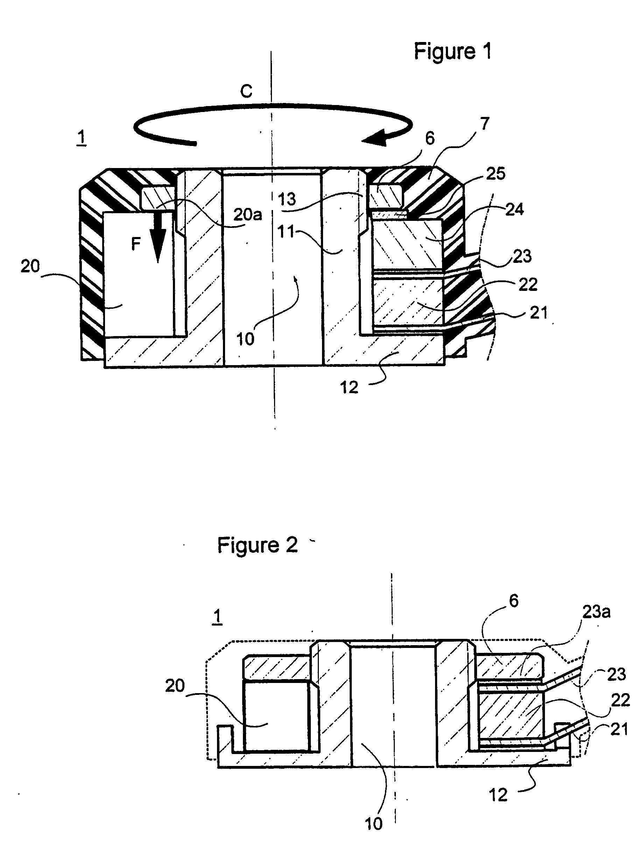

On se réfère maintenant à la figure 1 où on a représenté une coupe d'un capteur de cliquetis 1 constitué d'une embase 10 présentant la forme d'un manchon cylindrique 11 terminé à une extrémité par une collerette 12 formant un épaulement sur lequel vient prendre appui un empilage 20. Cet empilage 20, représenté globalement sur la partie gauche de la figure, est détaillé sur la partie droite. Il comporte notamment une première rondelle de contact 21 présentant une couche isolante en appui sur la collerette 12 et une face conductrice en contact avec une première face d'un élément piézo-électrique 22. La face opposée de l'élément piézo-électrique 22 est en contact avec la face conductrice d'une seconde rondelle de contact 23 comportant elle aussi une couche isolante sur la face opposée. Une masse inertielle 24 et le cas échéant, une rondelle 25 complètent cet empilage 20. L'empilage 20 est précontraint par un effort F appliqué par le serrage d'un écrou 6 coopérant avec un filetage 13 réalisé sur le manchon 11 à l'opposé de la collerette 12. L'ensemble est ensuite enrobé par un surmoulage 7 en matière plastique à des fins d'étanchéité.

L'effort de précontrainte F appliqué à l'empilage 20 est obtenu par le serrage de l'écrou 6 sous un couple de vissage C prédéterminé et contrôlé précisément. Cependant, si précis que puisse être le contrôle du couple de vissage C, ce dernier n'est pas intégralement transformé en effort de précontrainte. En effet, des frottements parasites se développent en cours de vissage, et plus particulièrement à la fin de celui-ci, entre le filetage 13 et l'écrou d'une part, et de manière plus importante, à l'interface de serrage 20a entre l'écrou et l'empilage. Ces frottements absorbent une partie variable et non négligeable du couple de vissage C, entraînant une variation de la partie réellement transformée en effort de précontrainte F, et donc une dispersion de celui-ci.

En conséquence, l'interface de serrage 20a entre l'écrou et l'empilage a été constituée de matériaux présentant un coefficient de friction propre à limiter ces frottements et donc l'influence de leur dispersion sur la partie utile du couple appliqué, transformée en effort de précontrainte.

Dans un premier mode de réalisation, on applique à l'écrou un traitement de surface consistant en un revêtement antifriction, par exemple un revêtement à base de polytétrafluorethylène (P.T.F.E). Cependant, de tels revêtements présentent, outre leur coût, d'autres inconvénients dans l'application envisagée. En effet, les propriétés d'adhérence de la matière du surmoulage 7 sur un tel revêtement sont très faibles, ce qui est susceptible d'entraîner des défauts d'étanchéité. De plus, pour des raisons de protection contre la corrosion, l'écrou est susceptible d'avoir subi un traitement préalable du type phosphatation, qui présente de bonnes qualités d'adhérence mais de mauvaises propriétés antifriction.

Dans une solution préférentielle de ce mode de réalisation, on dépose sur l'écrou, éventuellement préalablement phosphaté, un film sec non gras présentant des propriétés antifriction, obtenu par trempage de l'écrou dans une dispersion aqueuse de polymères synthétiques, par exemple du type commercialisé sous la référence MPE 1186 par la société Mac Dermid ou G 605 par la société Emonet. Cette solution présente l'avantage d'offrir lors du vissage un coefficient de frottement adapté, sans détériorer les propriétés d'adhérence du surmoulage. De plus, une fois le vissage effectué, l'assemblage peut subir un rinçage, suivi d'un séchage, permettant d'éliminer le film sur les parties exposées au surmoulage, permettant ainsi de retrouver les propriétés de la phosphatation de base. Selon une variante, il est possible de remplacer la dispersion aqueuse précitée par une composition à base de savon liquide.

Dans un second mode de réalisation, non exlusif du précédent, on utilise en partie supérieure de l'empilage 20, une rondelle 25 en matériau antifriction, par exemple en P.T.F.E. ou en polyimide. Ce second mode de réalisation est particulièrement adapté pour des capteurs de cliquetis du type représenté sur la figure 2. Ce type de capteur présente une hauteur réduite par rapport au type représenté en figure 1, du fait de la disparition de la masse inertielle 24. L'empilage 20 est alors constitué d'une rondelle de contact 21 analogue à celle de la figure 1, de l'élément piézoélectrique 22 et d'une rondelle de contact 23. La couche électriquement isolante 23a de cette dernière coopère directement avec l'écrou 6, qui présente une portée élargie, et joue le role d'interface de serrage (20a sur la figure 1) avec l'écrou. Cette couche isolante 23a peut être avantageusement obtenue par collage ou colaminage d'une feuille de matériau antifriction tels que ceux cités ci-dessus avec une feuille métallique constituant la couche conductrice de la rondelle 23. On combine ainsi de manière avantageuse les propriétés isolantes et antifriction des matériaux cités.

Dans un troisième mode de réalisation, on choisit judicieusement les matériaux constitutifs de l'écrou 6, de la masse inertielle 24 et éventuellement de l'embase 10, pour leurs caractéristiques de frottement relatif. En particulier, on pourra avantageusement réaliser un écrou 6 en bronze par exemple en bronze phosphoreux du type U-E9P, pour coopérer avec une masse inertielle 24 et un filetage 13 en acier.

Bien entendu, l'invention n'est pas limitée au mode de réalisation décrit et représenté qui n'a été donné qu'à titre d'exemple. On pourrait encore, en fonction du processus de fabrication de ces capteurs, associer ou remplacer tout ou partie des solutions décrites plus haut par une projection d'un aérosol de fines particules de P.T.F.E. sur la surface supérieure de la masse inertielle 24, pour autant qu'une telle opération puisse être menée dans des conditions telles que ces particules soient confinées à l'interface de serrage et n'interfèrent pas de manière préjudiciable à l'adhérence lors de l'opération de surmoulage.

## Revendications

1. Capteur de cliquetis (1), du type comportant
• une embase (10) constituée d'une collerette (12) et d'un manchon cylindrique (11) fileté à l'extrémité opposée à la collerette,
• un empilage (20) sensible aux accélérations comprenant au moins un élément piézo-électrique (22), enfilé sur le manchon,
• un écrou (30) coopérant avec le filetage (13) du manchon pour précontraindre l'empilage entre la collerette et l'écrou,
**caractérisé en ce que** l'écrou est revêtu d'un traitement de surface antifriction pour limiter la dispersion de l'effort de précontrainte (F) appliqué à l'empilage.

2. Capteur selon la revendication 1, **caractérisé en ce que** le traitement de surface antifriction est un film sec non gras déposé par trempage de l'écrou dans une dispersion aqueuse de polymères synthétiques.

3. Capteur selon l'une des revendications 1 ou 2, **caractérisé en ce que** l'empilage comporte en partie supérieure une rondelle en matériau antifriction.

4. Capteur selon l'une des revendications 1 ou 2, **caractérisé en ce que** l'écrou porte directement sur une rondelle de contact (23) et **en ce que** cette rondelle est revêtue, sur la face coopérant avec l'écrou, d'une couche (23a) de matériau antifriction et isolant électriquement.

5. Capteur selon l'une des revendications 1 ou 2, **caractérisé en ce que** l'écrou est en bronze et coopère avec un filetage et une surface supérieure de l'empilage en acier.

## Patentansprüche

1. Klopfsensor (1) mit
- einer Basis (10), die von einem Bund (12) und einer zylindrischen Buchse (11) gebildet wird, die an dem zum Bund entgegengesetzten Ende mit Gewinde versehen ist,
- einem auf Beschleunigungen ansprechenden Stapel (20) mit mindestens einem piezoelektrischen Element (22), das auf der Buchse sitzt,
- einer Mutter (30), die mit dem Gewinde (13) der Buchse zusammenwirkt, um den Stapel zwischen dem Bund und der Mutter vorzuspannen,
**dadurch gekennzeichnet, dass** die Mutter mit einer Antifriktions-Oberflächenbehandlung versehen ist, um die Streuung der auf den Stapel ausgeübten Vorspannkraft (F) zu verringern.

2. Klopfsensor nach Anspruch 1, **dadurch gekennzeichnet, dass** die Antifriktions-Oberflächenbehandlung ein nicht fetter, trockener Film ist, der durch Eintauchen der Mutter in eine wässrige Lösung synthetischer Polymere aufgetragen ist.

3. Klopfsensor nach Anspruch 1 oder 2, **dadurch gekennzeichnet, dass** der Stapel im oberen Abschnitt eine Scheibe aus Antifriktionsmaterial aufweist.

4. Klopfsensor nach Anspruch 1 oder 2, **dadurch gekennzeichnet, dass** die Mutter unmittelbar an einer Kontaktscheibe (23) aufliegt und dass diese Scheibe an der mit der Mutter zusammenwirkenden Stirnfläche mit einer Schicht (23a) aus elektrisch isolierendem Antifriktionsmaterial versehen ist.

5. Klopfsensor nach Anspruch 1 oder 2, **dadurch gekennzeichnet, dass** die Mutter aus Bronze besteht und mit einem Gewinde und einer oberen Fläche des Stapels aus Stahl zusammenwirkt.

## Claims

1. Piston knock sensor (1) of the type which includes
• a base (10) consisting of a flange (12) and a cylindrical sleeve (11) which is threaded at the end furthest from the flange,
• a layered structure (20) which is sensitive to acceleration and includes at least one piezoelectric element (22) threaded onto the sleeve,
• a nut (30) which works with the thread (13) on the sleeve to prestress the layered structure between the flange and. the nut,
**characterised in that** the nut is coated with an anti-friction surface treatment in order to limit dispersion of the prestressing force (F) applied to the layered structure.

2. Sensor according to Claim 1, **characterised in that** the anti-friction surface treatment is a non-greasy dry film deposited by immersing the nut in an aqueous dispersion of synthetic polymers.

3. Sensor according to Claims 1 or 2, **characterised in that** the layered structure includes in its upper part a washer made of anti-friction material.

4. Sensor according to Claims 1 or 2, **characterised in that** the nut bears directly on a contact washer (23) and that this washer is coated, on the side that works with the nut, with a layer (23a) of material which is both anti-friction and electrically insulating.

5. Sensor according to Claims 1 or 2, **characterised in that** the nut is made of bronze and works with a thread and an upper surface of the layered structure made of steel.
